# EUROPEAN PATENT SPECIFICATION

(11) **EP 3 522 734 B1**
(45) Date of publication and mention of the grant of the patent: **17.02.2021**
(21) Application number: 17730575.2
(22) Date of filing: 19.05.2017
(51) Int. Cl.: A23G 9/04

(54) **ICE CREAM MACHINE WITH INTEGRATED BLAST CHILLING**
EISKREMMASCHINE MIT INTEGRIERTER STRAHLKÜHLUNG
MACHINE À GLACE À REFROIDISSEMENT PAR SOUFFLAGE INTÉGRÉ

(30) Priority: 20.09.2016 IT 201600052005
(43) Date of publication of application: 14.08.2019
(73) Proprietor: Magri', Simonpietro, 95123 Catania (IT)
(72) Inventor: Magri', Simonpietro, 95123 Catania (IT)
(74) Representative: Maiello, Helenio Francesco
(86) International application number: PCT/IB2017/052954
(87) International publication number: WO 2018/055456

(56) References cited:
- GB-A- 326 692
- US-A- 6 060 099
- US-A1- 2006 233 919
- US-A1- 2007 140 044

## Description

### Technical Field

The present invention is applicable to the field of machine for food processing and treatment and it particularly relates with an ice cream machine with integrated blastchiller.

### State of the art

As known, one of the most important steps in the production of traditional ice cream to obtain a high quality product is represented by blast chilling, i.e. the process in which the product needs to be cooled rapidly to preserve the organoleptic qualities once the product will be transferred inside the vessels or pans to be brought into the showcase.

Actually, special machines, known as blast chiller are used for this step, which machines being constituted by powerful refrigerators which, operating at extremely low temperatures, usually between -40° C and -30° C and with forced ventilation to eliminate condensation, allow to subtract heat to the products, allowing rapid cooling or freezing of the core of the product.

This prevents the formation of ice crystals, helping to preserve the structure of the ice cream for a long time without having to use chemical stabilizers and additives.

The most commonly used solutions in the sector provide that the ice cream, leaving the creamer at an average temperature of -9°/10° C is collected in the pan and brought into the blast chilling cabinet, which is a separate element to the creamer.

This operating mode, no matter rapid the passage from the pan of the creamer to the blast chiller may be, cannot rule avoid a slight thermal excursion and a slight rise in the temperature of the product, which reduces its organoleptic properties.

### Scope of the invention

The object of the present invention is to overcome the above drawbacks by providing an ice cream machine with integrated blast chiller which has high efficiency properties.

A particular object is to provide an ice cream machine with an integrated blast chiller that allows to chill the ice cream directly at the exit of the creamer, avoiding the product to make a way to be transported to a suitable appliance during which it would undergo a heat excursion which would degrade its organoleptic properties.

Yet another particular object is to provide an ice cream machine with integrated blast chiller that supplies a product with improved aesthetic properties and in particular greater brightness.

Yet another particular object is to provide an ice cream machine with integrated blast chiller that allows for high productivity, high quality and relatively low energy consumption.

Such objects, as well as others that will become more apparent hereinafter, are achieved by an ice-cream machine with integrated blast chiller which, according to claim 1, comprises a containment casing housing creaming means for the ice cream, a collection basket of the creamed ice cream, an ice-cream dispensing mouth from said basket to a collecting pan.

The casing comprises blast chilling means for lowering the temperature operating at a temperature lower than -30° C to rapidly cool the ice cream leaving said mouth and collected in the pan, said blast chilling means being integrated into said casing and arranged below said dispensing mouth to cool the creamed ice cream immediately after the dispensing thereof from said basket.

Thanks to this combination of features, the ice cream temperature may be quickly cut down immediately after being creamed and without having to transport it to a separate blast chilling unit, avoiding thermal excursion harmful for the product quality. Preferably, said casing may comprise a blast chilling chamber adapted to house the collecting pan and provided with an upper opening for connection with said dispensing mouth and an inlet for a coolant flow produced by said blast chilling means enclosed in said casing.

In this way, the ice cream will be discharged directly from the creaming means to the blast chiller without the need for any intermediate passage even inside the machine.

Furtherly, said basket may comprise means for heating the ice cream exiting from said dispensing mouth which will preferably be adjusted to increase the temperature of the ice cream from a value between 5 ° C and 10 ° C with respect to the exit temperature from said creaming means.

This will make the flow of ice cream exiting from the creaming means more fluid and also give the product a more shiny and aesthetically more attractive appearance. According to an alternative configuration, the casing has a double structure with at least two means of casing associated with respective baskets provided with a dispensing mouth connected to respective lower abutment basins.

Moreover, said blast chilling means will comprise a single common refrigerant motor housed in said double structure casing and capable of sending a coolant flow in both of said abatement chambers.

In this way, it will be possible to double productivity while maintaining high product quality but using unique abatement tools to simplify machine structure and reduce energy consumption.

Advantageously, the casing, with single or double structure, may house pastorizing means of the ice cream and/or of the raw materials disposed upstream of said creaming means relative to the ice-cream delivery stream.

In this way the machine may carry out the whole process of heat treatment of the product, starting from the raw materials to the finished product ready to be consumed. Advantageous embodiments of the invention are obtained according to the dependent claims.

### Brief disclosure of the drawings

Further features and advantages of the invention will become more apparent in the light of the detailed description of some preferred but not exclusive embodiments of an ice cream machine with integrated blast chiller according to the invention, illustrated by way of non-limiting example with the aid of the attached drawings wherein:
- **FIG. 1**: is a perspective view of a machine according to a first preferred embodiment;

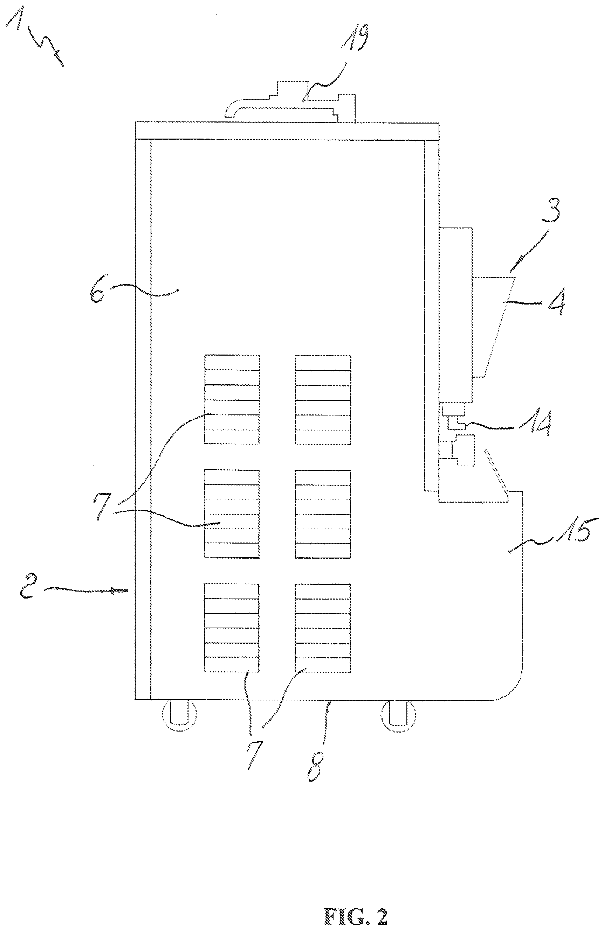

- **FIG. 2**: is a side view of the machine of Fig. 1;
- **FIG. 3**: is a front view of a machine according to a second configuration;
- **FIG. 4**: is a front view of a machine in a third configuration.

### Best modes of carrying out the invention

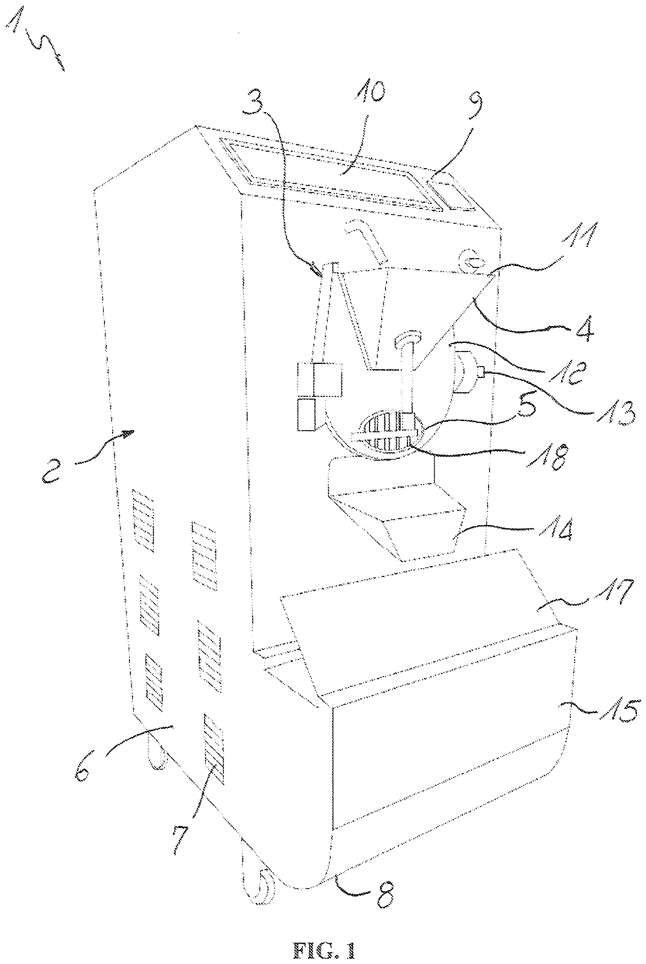

**Fig. 1** shows a preferred but not exclusive configuration of an ice cream machine, generally designated by **1,** comprising a containment casing **2** housing means **3** for creaming the ice cream, a basket **4** for collecting the creamed ice cream and a dispensing mouth **5** of the creamed ice cream in the basket **4** to send it to a collecting pan or similar container, not shown as per se known and which is not part of the present invention.

The casing **2** will have a configuration typical for the machines in the sector and, for example, will have an AISI 316 stainless steel structure. Other materials used for the machine may include, but not being limited to, polymeric materials such as ertacetal and metal materials such as Steel C45.

The casing **2** may be made up of side panels **6** provided with ventilation grilles **7** and a bottom panel **8** which will preferably be provided with wheels to facilitate displacement thereof.

On the upper panel **9** there will be a control panel **10** connected to processor control means, such as a PLC, and optionally provided with a touch-screen display for monitoring the whole working of the machine **1.**

The creaming means **3** will be housed inside the casing **2** and preferably comprise a whip with steel support and food grade plastic blades coupled to a gearmotor by bearings support means.

The gearmotor will be provided with a motovariator system adapted to ensure double speed rotation of the whip, at 700 rpm and 1400 rpm, to ensure high product quality and 8/1 reduction ratio.

The creaming means **3** will be connected to the basket **4** provided with a loading slide **11** of the raw materials and with the dispensing mouth **5** of the creamed ice cream.

The basket **4** will be provided with a door **12** hinged to the casing and provided with a removable locking device **13** to be opened in order to access the creaming means **3.**

Below the dispensing mouth **5** there will be provided a discharging slide **14** facing a blast chilling chamber **15** formed in the lower part of the same casing **2** and inside which the pan or other container may be arranged, which may be the same pan designed to be arranged inside a showcase for sale of bulk ice cream.

The blast chilling chamber **15** is in turn into communication with blast chilling means for lowering the temperature housed directly within the casing **2** and therefore not visible. The blast chilling means will operate at a temperature below -30° C, preferably -31° C, to rapidly cool the creamed ice cream leaving the mouth **5** and collected into the pan immediately after it is supplied from the basket **4.**

The blast chilling chamber **15** is provided with an upper opening **16** for connection with the dispensing mouth **5** and an inlet for a cooling stream produced by the blast chilling means enclosed in the casing **2.**

The blast chilling chamber **15** also comprises a top lid **17** which can be removed at least partially, for example hinged to an edge of the upper opening **16,** to close the upper opening **16** almost completely, leaving a slit free for the passage of the ice cream outgoing from the dispensing mouth **5.**

In particular, the inlet slot may be faced with the outlet section of the discharging slide **14.**

The blast chilling means will comprise a cooling motor provided with an expansion vessel housed into the casing **2** and coupled to a vaporizer and forced ventilation means of the cooling stream inside the blast chilling chamber **15.**

The back panel of the casing **2** will also have an opening for the cooling fan of the cooling motor.

According to a further particularly advantageous aspect, the basket **4** will comprise means for heating the ice cream exiting the dispensing mouth **5,** adjusted to increase the temperature of the ice cream at a predetermined value.

Preferably, the temperature increase provided by the heating means may be between 5° C and 10° C with respect to the exit temperature from the creaming means **3.**

In a preferred but not exclusive embodiment of the machine, the heating means may be associated directly with the dispensing mouth **5** and may comprise a resistance associated with a grid **18** arranged at the dispensing mouth **5.**

According to yet another variant, the casing **2** may house thereinside pasteurization means **19** of the ice cream and/or of the raw materials arranged upstream of the creaming means **3** with respect to the ice-cream delivery stream. Pasteurization means **19** may be selected from those commonly used in the art, without any particular limitations, and are therefore not described in more detail.

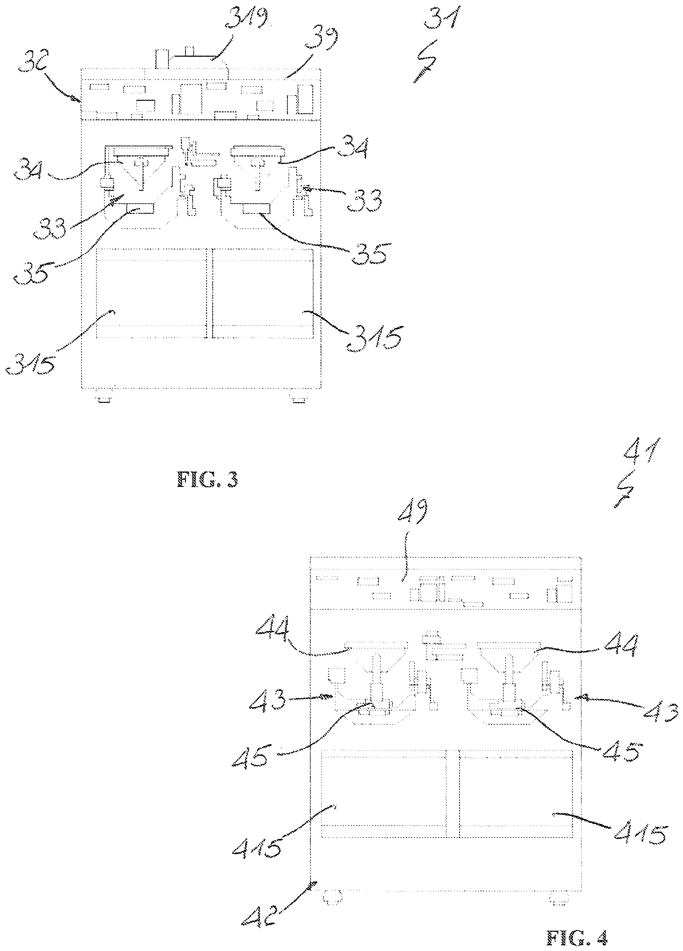

**Fig. 3** shows a further configuration of the machine **31** which differs from the preceding one first of all by having a double structure casing **32** having double creaming means **33** associated with respective baskets **34** provided with own dispensing mouth **35** and connected to respective lower blat chilling chambers **315.**

The blast chilling chambers **315** are however connected to the same blast chilling means housed in the casing **32** and having a single coolant engine adapted to send a coolant stream in both the blast chilling chambers **315.**

In this way you will have a particularly compact structure that will guarantee productivity of two distinct machines and at the same time allow to get the benefits of immediate temperature dropping by substantially halving the power consumption of the blast chiller as it will not be necessary to duplicate them. The machine is also provided with a pasteurization means **319,** which may also be unique for both the creaming means **33.**

Finally, **Fig. 4** shows a further variant that differs from the previous one by not including the pasteurization means.

From the description it is apparent that the machine according to the invention achieves the intended objects.

Although the machine has been described with particular reference to the attached figures, the reference numbers used in the description and claims are used to improve the intelligibility of the invention and do not constitute any limitation to the claimed scope.

## Claims

1. An ice cream machine with integrated blast chilling, comprising:
- a containment casing **(2)** housing means **(3)** for creaming the ice cream;
- a basket **(4)** for collecting the creamed ice cream;
- a dispensing mouth **(5)** of the creamed ice cream from said basket **(4)** to a collection pan;
**characterized in that** said casing **(2)** comprises blast chilling means operating at a temperature below -30° C to rapidly cool the ice cream supplied from said dispensing mouth **(5)** and collected in the pan, said blast chilling means being integrated into said casing **(2)** and arranged below said dispensing mouth **(5)** to cool the creamed ice cream immediately after its suppling from said basket **(4).**

2. Machine as claimed in claim 1, **characterized in that** said casing **(2)** comprises a blast chilling chamber **(15)** adapted to house the collection pan and provided with an upper opening **(16)** for connection with said dispensing mouth **(5)** and an inlet for a coolant flow produced by said blast chilling means enclosed in said casing **(2).**

3. Machine as claimed in claim 2, **characterized in that** said blast chilling chamber **(15)** comprises a removable top lid **(17)** adapted to close in an almost complete manner said upper opening **(16)** leaving free a slit for the passage of the ice cream supplied from said dispensing mouth **(5).**

4. Machine as claimed in claim 2 or 3, **characterized in that** said blast chilling means comprise a refrigeration motor housed in said casing **(2)** and provided with expansion vessel and coupled to a vaporizer and to means for the forced ventilation of said coolant flow inside said blast chilling chamber **(15).**

5. Machine as claimed in any preceding claim, **characterized in that** said basket **(4)** comprises means for heating the ice cream supplied from said dispensing mouth **(5).**

6. Machine as claimed in claim 5, **characterized in that** said heating means are adjusted to increase the temperature of the ice cream to a value between 5° C and 10° C greater than the outlet temperature from said blast chilling means **(3).**

7. Machine as claimed in claim 5 or 6, **characterized in that** said dispensing mouth **(5)** comprises an outlet grid **(18),** said heating means comprising a resistance associated to said grid **(18).**

8. Machine as claimed in any preceding claim, **characterized in that** said casing **(32, 42)** has a double structure with at least two blast chilling means **(33, 43)** associated with respective baskets **(34, 44)** provided with their own dispensing mouth **(35, 45)** each connected to a respective lower blast chilling chamber **(315, 415).**

9. Machine as claimed in claim 8, **characterized in that** said blast chilling means **(33, 43)** comprise a single common refrigerant motor housed in said double structure casing **(32, 42)** and adapted to send a coolant flow in both said blast chilling chambers **(315, 415).**

10. Machine as claimed in any preceding claim, **characterized in that** said creaming means **(3, 33, 43)** comprise a whip with a steel support and blades made of food grade plastic material coupled to a gearmotor by bearings support means.

11. Machine as claimed in claim 10, **characterized in that** said gearmotor is provided with an adjustable speed motor system adapted to ensure double speed of rotation of said whip and 8/1 reduction ratio.

12. Machine as claimed in any preceding claim, **characterized in that** said casing **(2, 32)** houses pasteurization means **(319)** of the ice cream and/or of the raw materials, said pasteurization means **(319)** being arranged upstream of said blast chilling means **(3, 33)** with respect to the supplying stream of the ice cream.

## Patentansprüche

1. Eiskremmaschine mit Integrierter Strahlkühlung, bestehend aus:
- ein Behälter **(2)** für die Aufrahmung des Eises;
- einen Korb **(4)** zum Sammeln des Rahmeises;
- einen Ausgabemund **(5)** des Rahmeises aus dem Korb **(4)** in eine Auffangwanne geben;
**dadurch gekennzeichnet, dass** der Behälter **(2)** Strahlkühlmittel umfasst, die bei einer Temperatur unter -30°C arbeiten, um das aus dem Ausgabemund **(5)** gelieferte und in der Pfanne gesammelte Eis schnell abzukühlen, wobei das Strahlkühlmittel in dem Behälter **(2)** integriert ist und unterhalb des Ausgabemund **(5)** angeordnet, um das Rahm-Eis unmittelbar nach seiner Abfüllung aus dem Korb **(4)** abzukühlen.

2. Maschine nach Anspruch 1, **dadurch gekennzeichnet, dass** der Behälter **(2)** eine Strahlkühlkammer **(15)** umfasst, die zur Aufnahme der Auffangwanne geeignet ist und mit einer oberen Öffnung **(16)** zur Verbindung mit der Abgabemündung **(5)** und versehen ist einen Einlass für einen Kühlmittelstrom, der durch das in dem Behälter **(2)** eingeschlossene Strahlkühlmittel erzeugt wird.

3. Maschine nach Anspruch 2, **dadurch gekennzeichnet, dass** die Strahlkühlkammer **(15)** einen abnehmbaren oberen Deckel **(17)** aufweist, der so ausgelegt ist, dass er die obere Öffnung **(16)** fast vollständig schließt, wobei ein Schlitz für den Durchgang des Eis, das aus dem Ausgabemund **(5)** geliefert wird.

4. Maschine nach Anspruch 2 oder 3, **dadurch gekennzeichnet, dass** die Strahlkühlmittel einen Kältemotor umfassen, der in dem Behälter **(2)** untergebracht ist und mit einem Expansionsgefäß versehen und mit einem Verdampfer und Mitteln zur erzwungenen Belüftung des Kühlmittelstroms verbunden ist in der Strahlkühlkammer (**15**).

5. Maschine, wie in einem vorhergehenden Anspruch beansprucht, **dadurch gekennzeichnet, dass** der Korb **(4)** Mittel zum Erhitzen des von der Abgabemündung (**5**) gelieferten Eises umfasst.

6. Maschine nach Anspruch 5, **dadurch gekennzeichnet, dass** die Heizmittel so eingestellt sind, dass die Temperatur des Eises auf einen Wert zwischen 5 ° C und 10 ° C erhöht wird, der höher ist als die Auslasstemperatur der Strahlkühlmittel **(3).**

7. Maschine nach Anspruch 5 oder 6, **dadurch gekennzeichnet, dass** die Abgabemündung **(5)** ein Auslassgitter (**18**) umfasst, wobei die Heizeinrichtung einen Widerstand aufweist, der dem Auslassgitter **(18)** zugeordnet ist.

8. Maschine, wie in einem vorhergehenden Anspruch beansprucht, **dadurch gekennzeichnet, dass** der Behälter **(32, 42)** eine Doppelstruktur mit mindestens zwei Strahlkühlmitteln (**33, 43**) aufweist, die den jeweiligen Körben (**34, 44**) zugeordnet sind, die mit ihrer eigenen Abgabe versehen sind Mund **(35, 45),** der jeweils mit einer jeweiligen unteren Strahlkühlkammer **(315, 415)** verbunden ist.

9. Maschine nach Anspruch 8, **dadurch gekennzeichnet, dass** das Strahlkühlmittel **(33, 43)** einen einzelnen gemeinsamen Kältemittelmotor umfasst, der in dem Doppelstrukturgehäse **(32, 42)** untergebracht ist und dazu ausgelegt ist, einen Kühlmittelstrom in beiden Strahlkühlsystemen zu senden Kammern (**315, 415**).

10. Maschine, wie in einem vorhergehenden Anspruch beansprucht, **dadurch gekennzeichnet, dass** die Strahlkühlmittel **(3, 33, 43)** eine Peitsche mit einer Stahlstütze und Klingen aus Kunststoff in Lebensmittelqualität umfasst, die durch Lagerstützeinrichtung mit einem Getriebemotor verbunden sind,

11. Maschine nach Anspruch 10, **dadurch gekennzeichnet, dass** der Getriebemotor mit einem Motorsystem mit einstellbarer Drehzahl versehen ist, das so ausgelegt ist, dass es eine doppelte Drehzahl der Peitsche und ein Untersetzungsverhältnis von 8/1 gewährleistet.

12. Maschine, wie in einem vorhergehenden Anspruch beansprucht, **dadurch gekennzeichnet, dass** die Behälter (**2, 32**) Pasteurisierungsmittel **(319)** des Eises und/oder der Rohmaterialien enthält, wobei das Pasteurisierungsmittel **(319)** stromaufwärts der Explosion angeordnet ist Strahlkühlmittel **(3, 33)** in Bezug auf den Zufuhrstrom des Eises.

## Revendications

1. Machine à glace à refroidissement par soufflage intégré, comprenant:
- un boîtier de confinement **(2)** des moyens de crémage **(3)** pour crémer la crème glacée;
- un panier **(4)** pour collecter la crème glacée à la crème;
- une bouche de distribution **(5)** de la crème glacée à la crème dudit panier **(4)** vers un bac de collecte;
**caractérisé en ce que** ledit boîtier **(2)** comprend des moyens de refroidissement rapide fonctionnant à une température inférieure à -30 ° C pour refroidir rapidement la crème glacée fournie par ladite bouche de distribution **(5)** et collectée dans le bac, lesdits moyens de refroidissement rapide étant intégrés dans ledit boîtier **(2)** et disposée sous ladite bouche de distribution **(5)** pour refroidir la crème glacée à la crème immédiatement après son approvisionnement à partir dudit panier (**4**).

2. Machine selon la revendication 1, **caractérisée en ce que** ledit boîtier **(2)** comprend une chambre de refroidissement rapide **(15)** adaptée pour loger le bac de collecte et pourvue d'une ouverture supérieure **(16)** pour la connexion avec ladite bouche de distribution **(5)** et une entrée pour un écoulement de liquide de refroidissement produit par ledit moyen de refroidissement rapide enfermé dans ledit boîtier (**2**).

3. Machine selon la revendication 2, **caractérisée en ce que** ladite chambre de refroidissement rapide **(15)** comprend un couvercle supérieur amovible **(17)** apte à fermer de manière presque complète ladite ouverture supérieure **(16)** laissant libre une fente pour le passage du crème glacée fournie à partir de ladite bouche de distribution (**5**).

4. Machine selon la revendication 2 ou 3, **caractérisée en ce que** lesdits moyens de refroidissement rapide comprennent un moteur de réfrigération logé dans ledit boîtier (2) et pourvu d'un vase d'expansion et couplé à un vaporisateur et à des moyens de ventilation forcée dudit flux de fluide caloporteur. à l'intérieur de ladite chambre de refroidissement rapide **(15).**

5. Machine selon l'une quelconque des revendications précédentes, **caractérisée en ce que** ledit panier **(4)** comprend des moyens pour chauffer la crème glacée fournie par ladite bouche de distribution (**5**).

6. Machine selon la revendication 5, **caractérisée en ce que** lesdits moyens de chauffage sont réglés pour augmenter la température de la crème glacée à une valeur comprise entre 5 ° C et 10 ° C supérieure à la température de sortie desdits moyens de refroidissement rapide (**3**).

7. Machine selon la revendication 5 ou 6, **caractérisée en ce que** ladite bouche de distribution **(5)** comprend une grille de sortie (**18**), lesdits moyens de chauffage comprenant une résistance associée à ladite grille (**18**).

8. Machine selon l'une quelconque des revendications précédentes, **caractérisée en ce que** ledit boîtier (**32**, **42)** a une double structure avec au moins deux moyens de refroidissement rapide **(33, 43)** associés à des paniers respectifs **(34, 44)** pourvus de leur propre distribution embouchure **(35, 45)** connectée chacune à une chambre de refroidissement par soufflage inférieure respective **(315, 415).**

9. Machine selon la revendication 8, **caractérisée en ce que** lesdits moyens de refroidissement rapide **(33, 43)** comprennent un seul moteur frigorifique commun logé dans ledit boîtier à double structure **(32, 42)** et adapté pour envoyer un flux de réfrigérant à la fois dans ledit chambres de refroidissement rapide **(315, 415**).

10. Machine selon l'une quelconque des revendications précédentes, **caractérisée en ce que** lesdits moyens de crémage (**3**, **33**, **43)** comprennent un fouet avec un support en acier et des lames en matière plastique de qualité alimentaire couplées à un motoréducteur par des moyens de support de roulements.

11. Machine selon la revendication 10, **caractérisée en ce que** ledit motoréducteur est pourvu d'un système de moteur à vitesse réglable apte à assurer une double vitesse de rotation dudit fouet et un rapport de réduction de 8/1.

12. Machine selon l'une quelconque des revendications précédentes, **caractérisée en ce que** ladite boîtier **(2, 32)** abrite des moyens de pasteurisation (**319**) de la crème glacée et/ou des matières premières, lesdits moyens de pasteurisation (**319**) étant disposés en amont dudit moyens de crémage (**3,33**) par rapport au courant d'alimentation de la crème glacée.
